# EUROPEAN PATENT APPLICATION

(11) **EP 4 026 940 A1**
(43) Date of publication of application: **13.07.2022**
(21) Application number: 19943979.5
(22) Date of filing: 04.09.2019
(51) Int. Cl.: D06F 58/30, D06F 58/08, D06F 58/26, G06N 3/08

(54) **ARTIFICIAL INTELLIGENCE DRYER**

(71) Applicant: LG Electronics Inc., Yeongdeungpo-gu Seoul 07336 (KR)
(72) Inventor: PARK, Yunsik, Seoul 08592 (KR)
(74) Representative: Katérle, Axel
(86) International application number: PCT/KR2019/011431
(87) International publication number: WO 2021/045259

(57) **Abstract**

The present disclosure relates to an artificial intelligence (AI) dryer. The AI dryer according to an embodiment of the present disclosure includes: a casing; a washing tub disposed in the casing; a motor configured to rotate the washing tub; a driver configured to drive the motor and including an output current detector for detecting an output current flowing through the motor; a heat supplier configured to supply heat to the washing tub; and a controller configured to control the driver, wherein the controller performs learning using DNN based on the output current detected by the output current detector, determines a load of laundry in the washing tub by the learning, and determines operation course information based on information of load of the laundry, thereby providing optimal operation course information corresponding to the information of load of the laundry.

## Description

### BACKGROUND OF THE INVENTION

### 1. Field of the disclosure

The present disclosure relates to an artificial intelligence (AI) dryer, and more particularly to an AI dryer capable of providing optimal operation course information corresponding to laundry load information.

### 2. Related Art

A dryer performs a drying operation for drying laundry, placed in a washing tub, by supplying heat to the washing tub.

Generally, the drying operation is determined based on an amount of laundry put into washing tub (hereinafter referred to as "amount of laundry"). Accordingly, if the amount of laundry is measured inaccurately, a problem occurs in that sufficient drying performance may not be achieved.

In addition, a deviation occurs in the drying performance which is affected not only by the amount of laundry but also by the type of laundry (hereinafter referred to as "quality of laundry").

Recently, there is a great interest in machine learning, such as AI, deep learning, etc., such that research is increasingly being conducted to apply AI and machine learning techniques to various products and services.

### SUMMARY

It is an object of the present disclosure to provide a dryer capable of providing optimal operation course information corresponding to laundry load information.

It is another object of the present disclosure to provide a dryer capable of determining a laundry load through deep neural network (DNN) based learning, and providing optimal operation course information corresponding to the laundry load information.

In accordance with an aspect of the present disclosure, the above and other objects can be accomplished by providing an artificial intelligent (AI) dryer, including: a casing; a washing tub disposed in the casing; a motor configured to rotate the washing tub; a driver configured to drive the motor and including an output current detector for detecting an output current flowing through the motor; a heat supplier configured to supply heat to the washing tub; and a controller configured to control the driver, wherein the controller is configured to perform learning using deep neural network (DNN) based on the output current detected by the output current detector, determine a load of laundry in the washing tub by the learning, and determine operation course information based on information of load of the laundry.

Meanwhile, when determining the load of the laundry in the washing tub, the controller may determine amount of laundry and quality of laundry of the laundry.

Meanwhile, the AI dryer may further include: a temperature sensor configured to sense temperature in the washing tub; and a humidity sensor configured to sense humidity in the washing tub, wherein the controller may perform learning using DNN based on temperature information sensed by the temperature sensor, humidity information sensed by the humidity sensor, and the output current, may determine the load of the laundry in the washing tub by the learning, and may determine the operation course information based on the information of load of the laundry.

Meanwhile, during determination of the load, the laundry in the washing tub may include dehydrated laundry.

Meanwhile, the controller may perform the learning using DNN based on the output current detected by the output current detector during a period of a tumbling motion of the washing tub, may determine the load of the laundry in the washing tub by the learning, and may determine the operation course information based on the information of load of the laundry.

Meanwhile, the controller may perform an operation based on the determined operation course information, and may output the operation course information.

Meanwhile, the AI dryer may further include a memory for storing a plurality of operation course information, wherein the determined operation course information may be additional operation course information which is not stored in the memory.

Meanwhile, the memory may store the additional operation course information.

Meanwhile, the controller may perform classification for setting an operation course based on a level of the information of load of the laundry, and may determine the operation course information based on the classification.

Meanwhile, the controller may access an external server to perform searching based on classified information obtained by the classification, and may determine the operation course information based on a search result.

Meanwhile, the controller may access an external server to perform searching based on the level of the information of load of the laundry, and may determine the operation course information based on a search result.

Meanwhile, in response to the determined operation course information being first operation course information or second operation course information, the controller may control operations of increasing a speed of the washing tub to a first speed, maintaining the first speed, and decreasing the speed to be performed sequentially; and in response to the determined operation course information being third operation course information, the controller may control operations of increasing the speed of the washing tub to a second speed which is higher than the first speed, decreasing the speed to a third speed, maintaining the third speed, and decreasing the speed to be performed sequentially.

The controller may vary a dry level in the washing tub based on any one of the first operation course information to the third operation course information.

In accordance with another aspect of the present disclosure, the above and other objects can be accomplished by providing an artificial intelligent (AI) dryer, including: a casing; a washing tub disposed in the casing; a motor configured to rotate the washing tub; a driver configured to drive the motor and including an output current detector for detecting an output current flowing through the motor; a heat supplier configured to supply heat to the washing tub; and a controller configured to control the driver, wherein the controller is configured to perform learning using DNN based on the output current detected by the output current detector, determine quality of laundry of laundry in the washing tub by the learning, and determine operation course information based on information of quality of laundry of the laundry.

### EFFECTS OF THE DISCLOSURE

In accordance with an aspect of the present disclosure, the above and other objects can be accomplished by providing an artificial intelligent (AI) dryer, including: a casing; a washing tub disposed in the casing; a motor configured to rotate the washing tub; a driver configured to drive the motor and including an output current detector for detecting an output current flowing through the motor; a heat supplier configured to supply heat to the washing tub; and a controller configured to control the driver, wherein the controller is configured to perform learning using deep neural network (DNN) based on the output current detected by the output current detector, determine a load of laundry in the washing tub by the learning, and determine operation course information based on information of load of the laundry. Accordingly, the AI dryer may provide optimal operation course information corresponding to the information of load of the laundry. Particularly, by determining the load of the laundry through learning using DNN, the AI dryer may provide optimal operation course information corresponding to the information of load of the laundry.

Meanwhile, when determining the load of the laundry in the washing tub, the controller may determine amount of laundry and quality of laundry of the laundry, thereby providing optimal operation course information corresponding to amount of laundry and quality of laundry of the laundry.

Meanwhile, the AI dryer may further include: a temperature sensor configured to sense temperature in the washing tub; and a humidity sensor configured to sense humidity in the washing tub, wherein the controller may perform learning using DNN based on temperature information sensed by the temperature sensor, humidity information sensed by the humidity sensor, and the output current, may determine the load of the laundry in the washing tub by the learning, and may determine the operation course information based on the information of load of the laundry. Particularly, by determining the load of the laundry through learning using DNN based on the temperature, humidity, and the output current, the AI dryer may provide optimal operation course information corresponding to the information of load of the laundry.

Meanwhile, during determination of the load, the laundry in the washing tub may include dehydrated laundry. Accordingly, by determining the load of dried laundry, the AI dryer may provide optimal operation course information.

Meanwhile, the controller may perform the learning using DNN based on the output current detected by the output current detector during a period of a tumbling motion of the washing tub, may determine the load of the laundry in the washing tub by the learning, and may determine the operation course information based on the information of load of the laundry. Accordingly, the AI dryer may provide optimal operation course information corresponding to the information of load of the laundry.

Meanwhile, the controller may perform an operation based on the determined operation course information, and may output the operation course information, thereby allowing a user to easily recognize the operation course information.

Meanwhile, the AI dryer may further include a memory for storing a plurality of operation course information, wherein the determined operation course information may be additional operation course information which is not stored in the memory. Accordingly, the AI dryer may provide new operation course information.

Meanwhile, the memory may store the additional operation course information, thereby storing new operation course information.

Meanwhile, the controller may perform classification for setting an operation course based on a level of the information of load of the laundry, and may determine the operation course information based on the classification, thereby providing optimal operation course information corresponding to the information of load of the laundry.

Meanwhile, the controller may access an external server to perform searching based on classified information obtained by the classification, and may determine the operation course information based on a search result, thereby providing operation course information by using the external server.

Meanwhile, the controller may access an external server to perform searching based on the level of the information of load of the laundry, and may determine the operation course information based on a search result, thereby providing operation course information by using the external server.

Meanwhile, in response to the determined operation course information being first operation course information or second operation course information, the controller may control operations of increasing a speed of the washing tub to a first speed, maintaining the first speed, and decreasing the speed to be performed sequentially; and in response to the determined operation course information being third operation course information, the controller may control operations of increasing the speed of the washing tub to a second speed which is higher than the first speed, decreasing the speed to a third speed, maintaining the third speed, and decreasing the speed to be performed sequentially. Accordingly, the AI dryer may drive the washing tub optimally based on the operation course information.

The controller may vary a dry level in the washing tub based on any one of the first operation course information to the third operation course information, thereby performing drying optimally based on the operation course information.

In accordance with another aspect of the present disclosure, the above and other objects can be accomplished by providing an artificial intelligent (AI) dryer, including: a casing; a washing tub disposed in the casing; a motor configured to rotate the washing tub; a driver configured to drive the motor and including an output current detector for detecting an output current flowing through the motor; a heat supplier configured to supply heat to the washing tub; and a controller configured to control the driver, wherein the controller is configured to perform learning using DNN based on the output current detected by the output current detector, determine quality of laundry of laundry in the washing tub by the learning, and determine operation course information based on information of quality of laundry of the laundry. Particularly, by determining the quality of laundry of the laundry through learning using DNN the AI dryer may provide optimal operation course information corresponding to the information of quality of laundry of the laundry.

### BRIEF DESCRIPTION OF THE DRAWINGS

FIG. 1 is a perspective view of a dryer according to an embodiment of the present disclosure;
FIG. 2 is an internal block diagram of the dryer shown in FIG. 1;
FIG. 3 is an internal circuit diagram of a motor driver shown in FIG. 2;
FIG. 4 is an internal block diagram of an inverter controller shown in FIG. 3;
FIG. 5 is a diagram illustrating a pattern of current applied to a motor based on the state of laundry and amount of load (amount of laundry);
FIG. 6 is a diagram illustrating a current pattern by quality of laundry;
FIG. 7 is a diagram illustrating current patterns by load when the speed of a motor is controlled using a predetermined method;
FIG. 8 is a diagram illustrating a process of processing present current values, obtained by a current detector, as input data of an artificial neural network;
FIG. 9 is a schematic diagram illustrating an example of the artificial neural network;
FIG. 10 is a schematic diagram illustrating a process of determining amount of laundry and quality of laundry using a present current value of the motor, by dividing the process into a learning process and a recognition process;
FIG. 11 is a diagram illustrating (a) a graph showing a present current value detected by a current detector, and (b) a graph showing average values obtained by processing a moving average filter;
FIG. 12 is a diagram illustrating a graph showing current values detected by a current detector;
FIG. 13 is a diagram illustrating a graph showing values, obtained by processing the current values of the graph shown in FIG. 11, for use as input data of the artificial neural network;
FIG. 14 is a flowchart illustrating a method of controlling a dryer according to an embodiment of the present disclosure;
FIG. 15 is a diagram illustrating a graph showing patterns that are superimposed on one another;
FIG. 16 is a graph showing classification of current patterns corresponding to loads of 0 kg to 6 kg in FIG. 15;
FIG. 17 is a graph showing classification of current patterns corresponding to loads of 7 kg to 9 kg in FIG. 15;
FIG. 18 is a flowchart illustrating a method of controlling a dryer according to an embodiment of the present disclosure;
FIGS. 19 to 20C are diagrams referred to in the description of the method of controlling the dryer of FIG. 18; and
FIG. 21 is a flowchart illustrating a method of controlling a dryer according to another embodiment of the present disclosure.

### DESCRIPTION OF EXEMPLARY EMBODIMENTS

Hereinafter, embodiments of the present disclosure will be described in further detail with reference to the accompanying drawings.

With respect to constituent elements used in the following description, the terms "module" and "unit" are used merely for convenience of description, and thus they should not be considered as having specific meanings or roles. Accordingly, the terms "module" and "unit" may be used interchangeably.

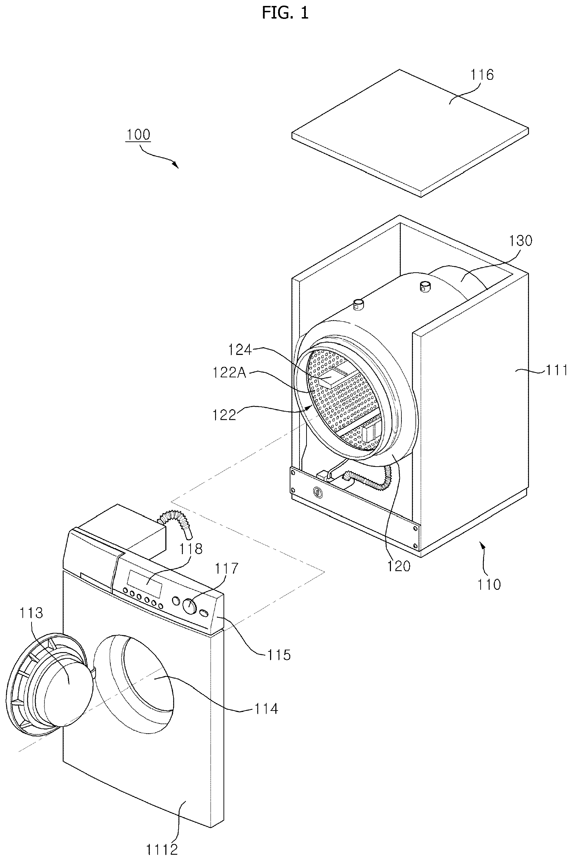

FIG. 1 is a perspective view of a dryer according to an embodiment of the present disclosure.

Referring to FIG. 1, a dryer 100 according to an embodiment of the present disclosure is a front load dryer, in which laundry is introduced into a washing tub from the front of the dryer.

Referring to the drawing, the dryer 100 is a drum type dryer and includes: a casing 110 defining an outer appearance of the dryer 100; a washing tub 120 mounted in the casing 110 and supported by the casing 110; a drum 122 mounted in in the washing tub 120 for washing laundry therein; a motor 130 for driving the drum 122; and a drainage device (not shown) formed under the washing tub 120 and discharging water to the outside.

The drum 122 has a plurality of through-holes 122A through which wash water can pass. In addition, the drum 122 may have lifters 124 arranged at an inner surface thereof to lift and drop laundry within a given height range during rotation of the drum 122.

The casing 110 includes the cabinet main body 111, a cabinet cover 112 located at and coupled to a front surface of the cabinet main body 111, a control panel 115 located at the top of the cabinet cover 112 and coupled to the cabinet main body 111, and a top plate 116 located at the top of the control panel 115 and coupled to the cabinet main body 111.

The cabinet cover 112 has a laundry introduction/removal opening 114 to allow laundry to be introduced into or removed from the drum 122, and a door 113 installed in a leftward/rightward pivoting manner to open or close the laundry introduction/removal opening 114.

The control panel 115 includes input device 117 to set an operational state of the drier 100, and a display 118 located at one side of the input device 117 to display the operational state of the drier 100.

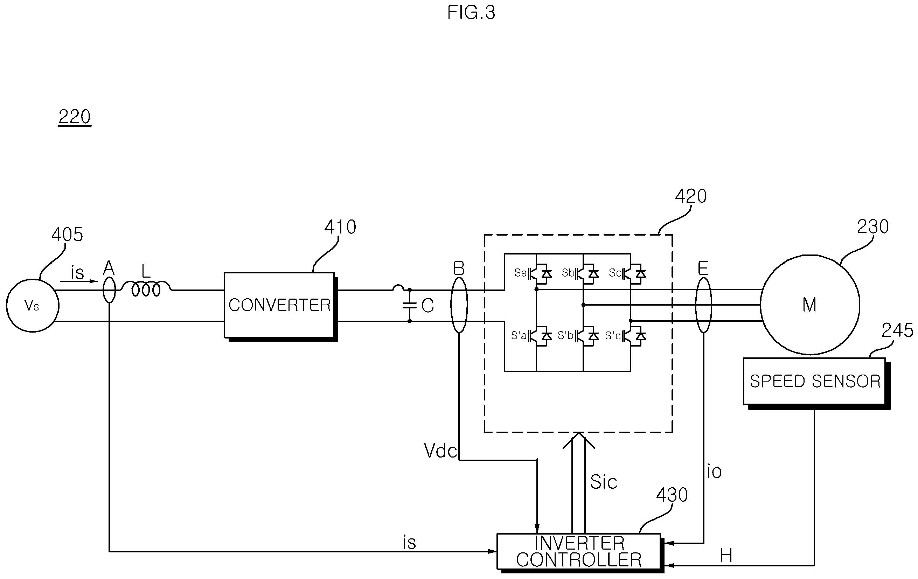

The input device 117 and the display 118 provided at the control panel 115 are electrically connected to a controller (not shown), which electrically controls respective components of the dryer 100. The description of the operation of the controller (not shown) will be omitted, as the operation of a controller 210 will be described later with reference to FIG. 3.

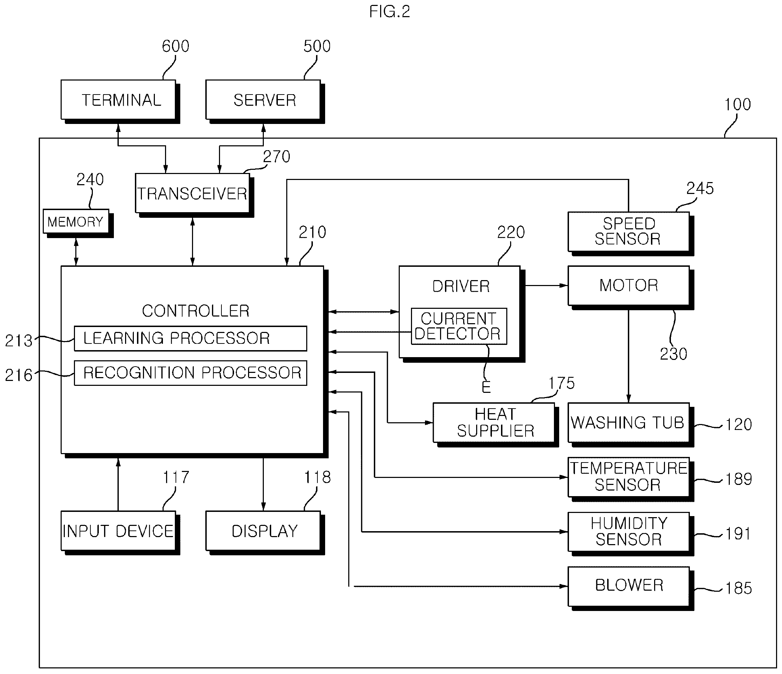

FIG. 2 is an internal block diagram of the dryer shown in FIG. 1.

Referring to FIG. 2, the dryer 100 includes a motor 230 for rotating the washing tub 120, a driver 220 for driving the motor 230, a transceiver 270, an input device 117, a display 118, a controller 210 for controlling each device of the dryer 100, a speed sensor 245, a heat supplier 175, a temperature sensor 189, a humidity sensor 191, and a blower 185.

The input device 117 may include a manipulation key (power key, operation key, etc.) for manipulating the dryer 100.

The input device 117 may further include a microphone (not shown) for user speech recognition.

The display 118 may display an operating state of the dryer 100.

For example, the display 118 may display operation course information while the dryer 100 is in operation.

The heat supplier 175 may supply heat to the washing tub 120.

For example, the heat supplier 175 may include a heater, which raises the temperature of air, so that the heated air may be supplied into the washing tub 120 by the blower 185.

In another example, the heat supplier 175 may include a heat pump, in which air increases in temperature by a compressor, an evaporator, a condenser, etc., to be supplied into the washing tub 120 by the blower 185.

In yet another example, the heat supplier 175 may include an RF output device for outputting an RF signal, in which air increases in temperature by the RF signal to be supplied into the washing tub 120 by the blower 185.

The memory 240 may store a programmed artificial intelligence, patterns of current by amount of laundry and/or by quality of laundry, a database DB constructed through machine learning based training based on the patterns of current, a machine learning algorithm, present output current values detected by the output current detector E, an average of the present output current values, a value obtained by processing the average according to a parsing rule, data transmitted and received through the transceiver 270.

In addition, the memory 240 may store various control data for controlling the overall operation of the dryer, drying setting data input by a user, drying time calculated according to the drying setting, data about a drying course, data for determining whether an error occurs in the dryer, and the like.

The transceiver 270 may communicate with an external mobile terminal 600, a server 500, and the like.

To this end, the transceiver 270 may include one or more communication modules, such as an Internet module, a mobile communication module, and the like. The transceiver 270 may receive various data, such as training data, algorithm update, and the like.

The controller 210 may update the memory 240 by processing various data received through the transceiver 270. For example, in the case where data input through the transceiver 270 are update data about an operating program stored in the memory 240, the controller 210 may update the memory 240 by using the update data, and in the case where the input data are data about a new operating program, the controller 210 may further store the new operating program in the memory 240.

Deep learning is a method of teaching a human's way of thinking to a computer based on an artificial neural network (ANN) for constructing artificial intelligence, and is artificial intelligence technology enabling the computer to autonomously learn like a human although the human does not teach the computer. The artificial neural network (ANN) may be implemented in the form of software or implemented in the form of hardware, such as a chip and the like.

By processing current values detected by the output current detector E based on machine learning, the dryer 100 may identify the characteristics of laundry (cloth) placed in the washing tub 120 (hereinafter referred to as laundry characteristics). Examples of the laundry characteristics may include the amount of laundry and the state of laundry (hereinafter referred to as "quality of laundry"), and the controller 210 may determine the quality of laundry by amount of laundry based on machine learning.

For example, the controller 210 may calculate amount of laundry, and then may determine one of previously classified categories, to which laundry belongs, based on quality of laundry. The state of laundry may be defined based on various factors, such as the material of laundry, the softness of laundry (e.g., soft laundry/hard laundry), ability of laundry to contain water (i.e., water content), a volumetric difference between dry laundry and wet laundry, the composition of laundry (mixing ratio between soft laundry and hard laundry), and the like.

The controller 210 may detect amount of laundry by using the present output current values, detected by the output current detector E until a target speed is reached, as input data of the ANN previously trained through machine learning.

The controller 210 may control the motor driver 220.

The motor driver 220 may drive the motor 230. Accordingly, the washing tub 120 may be rotated by the motor 230.

The controller 210 may operate by receiving an operation signal from the input device 117, thereby performing a drying cycle.

In addition, the controller 210 may control the display 118 to display a drying course, a drying time, a current operating state, and the like.

The controller 210 may control the motor driver 220 to operate the motor 230.

The motor driver 220, which drives the motor 230, may include an inverter (not shown) and an inverter controller (not shown), and the output current detector E (see FIG. 3) for detecting an output current flowing through the motor 230. In addition, the motor driver 220 may be a concept further including a converter for supplying Direct Current (DC) power input to the inverter (not shown).

For example, the inverter controller (430 of FIG. 3) in the motor driver 220 may estimate a position of a rotor of the motor 230 based on an output current io. Further, the motor driver 220 controls the motor 230 to rotate based on the estimated position of the rotor.

Specifically, when the inverter controller (430 of FIG. 3) generates a Pulse Width Modulation (PWM) type switching control signal (Sic of FIG. 3) based on the output current io and outputs the signal to the inverter (not shown), the inverter (not shown) may perform fast switching to supply Alternating Current (AC) power having a predetermined frequency to the motor 230, and the motor 230 is rotated by the AC power of the predetermined frequency.

The motor driver 220 will be described later with reference to FIG. 3.

In addition, the controller 210 may detect amount of laundry based on the current iₒ detected by the current detector 220. For example, the controller 210 may detect the amount of laundry based on the current value iₒ of the motor 230 during rotation of the washing tub 120.

The controller 210 may perform recognition and learning through machine learning. To this end, the controller 210 may include a learning processor 213 and a recognition processor 216.

The speed sensor 245 may include a Hall sensor disposed inside or outside of the motor 230 and sensing a position of the rotor of the motor. Accordingly, the speed sensor 245 may be referred to as a position sensor.

A position signal H, output from the speed sensor 245, may be input to the controller 210, and the controller 210 may sense the speed of the motor 230 based on the position signal H.

FIG. 3 is an internal circuit diagram of a motor driver shown in FIG. 2. Referring to FIG. 3, the motor driver 220 according to an embodiment of the present disclosure is used for driving a motor in a sensorless mode, and may include a converter 410, an inverter 420, an inverter controller 430, a DC terminal voltage detector B, a smoothing capacitor C, an output current detector E, and an output voltage detector F. In addition, the motor driver 220 may further include an input current detector A, a reactor L, and the like.

The reactor L is located between a commercial AC power source (405, vₛ) and the converter 410 and implements power factor correction or boosting. In addition, the reactor L may function to restrict harmonic current due to fast switching.

The input current detector A may detect an input current iₛ input from the commercial AC power source 405. To this end, a current transformer (CT), shunt resistor or the like may be used as the input current detector A. The detected input current iₛ may be a discrete pulse signal and be input to the controller 430.

The converter 410 converts and outputs AC power, received from the commercial AC power source 405 and passed through the reactor L, into DC power.

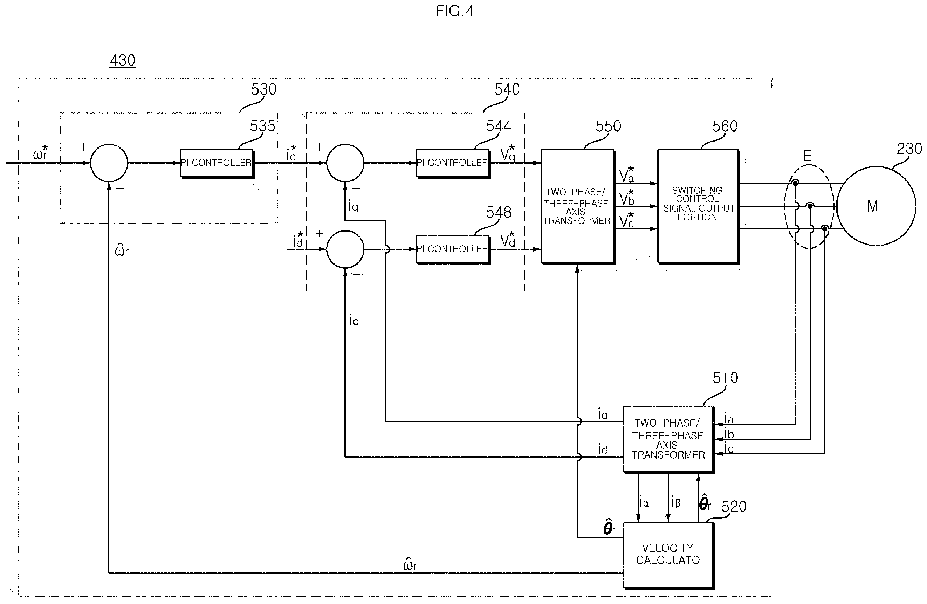

FIG. 4 shows the commercial AC power source 405 as a single phase AC power source, but the commercial AC power source 405 may be a three-phase AC power source. Depending on the kind of the commercial AC power source 405, the internal configuration of the converter 410 is altered.

The converter 410 may be constituted of diodes, and the like without a switching element, and implement rectification without switching.

For example, the converter 410 may include four diodes in the form of a bridge assuming a single phase AC power source, or may include six diodes in the form of a bridge assuming three-phase AC power source.

The converter 410 may be a half bridge type converter in which two switching elements and four diodes are interconnected, for example. Under the assumption of a three phase AC power source, the converter 410 may include six switching elements and six diodes.

If the converter 410 includes a switching element, the converter 410 may implement boosting, power factor correction, and DC power conversion via switching by the switching element.

The smoothing capacitor C implements smoothing of input power and stores the same. FIG. 3 shows a single smoothing capacitor C, but a plurality of smoothing capacitors may be provided to achieve stability.

FIG. 3 shows that the smoothing capacitor C is connected to an output terminal of the converter 410, but the present disclosure is not limited thereto, and DC power may be directly input to the smoothing capacitor C. For example, DC power from a solar battery may be directly input to the smoothing capacitor C, or may be DC/DC converted and then input to the smoothing capacitor C. The following description will focus on illustration of the drawing.

Both terminals of the smoothing capacitor C store DC power, and thus may be referred to as a DC terminal or a DC link terminal.

The dc terminal voltage detector B may detect a voltage Vdc at either dc terminal of the smoothing capacitor C. To this end, the dc terminal voltage detector B may include a resistor, an amplifier and the like. The detected dc terminal voltage Vdc may be a discrete pulse signal and be input to the inverter controller 430.

The inverter 420 may include a plurality of inverter switching elements, and convert smoothed DC power Vdc into a predetermined frequency of three-phase AC power va, vb, vc via On/off switching by the switching elements to thereby output the same to the three-phase synchronous motor 230.

The inverter 420 includes a pair of upper arm switching elements Sa, Sb, Sc and lower arm switching elements S'a, S'b, S'c which are connected in series, and a total of three pairs of upper and lower arm switching elements Sa & S'a, Sb & S'b, Sc & S'c are connected in parallel. Diodes are connected in anti-parallel to the respective switching elements Sa, S'a, Sb, S'b, Sc, S'c.

The switching elements included in the inverter 420 are respectively turned on or off based on an inverter switching control signal Sic from the inverter controller 430. Thereby, three-phase AC power having a predetermined frequency is output to the three-phase synchronous motor 230.

The inverter controller 430 may control a switching operation of the inverter 420 in a sensorless mode. To this end, the inverter controller 430 may receive an output current iₒ detected by the output current detector E and an output voltage vₒ detected by the output voltage detector F.

In order to control the switching operation of the inverter 420, the inverter controller 430 outputs an inverter switching control signal Sic to the inverter 420. The inverter switching control signal Sic is a PWM switching control signal, and is generated and output based on the output current iₒ detected by the output current detector E and the output voltage vₒ detected by the output voltage detector F. A detailed description of the output inverter switching control signal Sic in the inverter controller 430 will follow with reference to FIG. 4.

The output current detector E detects an output current iₒ flowing between the inverter 420 and the three-phase synchronous motor 230. That is, the output current detector E detects a current flowing through the motor 230. The output current detector E may detect each phase output current ia, ib, ic, or may detect a two-phase output current using three-phase balance.

The output current detector E may be located between the inverter 420 and the motor 230. To detect a current, a current transformer (CT), shunt resistor, or the like may be used as the output current detector E.

Assuming use of a shunt resistor, three shunt resistors may be located between the inverter 420 and the synchronous motor 230, or may be respectively connected at one end thereof to the three lower arm switching elements S'a, S'b, S'c. Alternatively, two shunt resistors may be used based on three-phase balance. Yet alternatively, assuming use of a single shunt resistor, the shunt resistor may be located between the above-described capacitor C and the inverter 420.

The detected output current iₒ may be a discrete pulse signal and may be applied to the inverter controller 430. Thus, the inverter switching control signal Sic is generated based on the detected output current iₒ. The following description will explain that the detected output current iₒ is three-phase output currents ia, ib, ic.

The three-phase motor 230 includes a stator and a rotor, and the AC voltage of each phase, which has the predetermined frequency, is applied to the coil of the stator of each phase a, b or c to rotate the rotor.

The motor 230, for example, may include a Surface Mounted Permanent Magnet Synchronous Motor (SMPMSM), Interior Permanent Magnet Synchronous Magnet Synchronous Motor (IPMSM), or Synchronous Reluctance Motor (SynRM). Among these motors, the SMPMSM and the IPMSM are Permanent Magnet Synchronous Motors (PMSMs), and the SynRM contains no permanent magnet.

In the case where the converter 410 includes a switching element, the inverter controller 430 may control switching by the switching element included in the converter 410. To this end, the inverter controller 430 may receive an input current iₛ detected by the input current detector A. In addition, to control switching in the converter 410, the inverter controller 430 may output a converter switching control signal Scc to the converter 410. The converter switching control signal Scc may be a PWM switching control signal and may be generated and output based on an input current iₛ detected by the input current detector A.

FIG. 4 is an internal block diagram of an inverter controller shown in FIG. 3.

Referring to FIG. 4, the inverter controller 430 may include an axis transformer 510, a velocity calculator 520, a current command generator 530, a voltage command generator 540, an axis transformer 550, and a switching control signal output portion 560.

The axis transformer 510 receives the three-phase output currents iₐ, i_{b}, and i_{c} detected by the output current detector E and transforms the received output currents iₐ, i_{b}, and i_{c} into two-phase currents i_{α} and i_{β} of a stationary coordinate system, and into two-phase currents i_{d} and i_{q} of a rotating coordinate system. In this case, id denotes a magnetic flux current and iq denotes a torque current.

The axis transformer 510 may output the transformed two-phase currents i_{α} and i_{β} of a stationary coordinate system, two-phase voltages vα and vβ of a stationary coordinate system, two-phase currents i_{d} and i_{q} of a rotating coordinate system, and two-phase voltages vd and vq of a rotating coordinate system to the outside.

The velocity calculator 520 may calculate a position θ and velocity ω of the rotor of the motor 230 by receiving the transformed two-phase currents i_{α} and i_{β} of the stationary coordinate system and two-phase voltages vα and vβ of the stationary coordinate system from the axis transformer 510.

The current command generator 530 may generate a current command value i^{∗}_{q} based on the calculated velocity .ω̂*ᵣ* and a velocity command value ω^{∗}ᵣ. For example, the current command generator 530 may generate the current command value i^{∗}_{q} based on a difference between the calculated velocity .ω̂*ᵣ* and the velocity command value ω^{∗}ᵣ while a PI controller 535 implements PI control. The drawing shows a q-axis current command value i^{∗}_{q} as the current command value, but unlike the drawing, a d-axis current command value i^{∗}_{d} may also be generated. The d-axis current command value i^{∗}_{d} may be set to zero.

The current command generator 530 may include a limiter (not shown) that limits the level of the current command value i^{∗}_{q} to prevent the current command value i^{∗}_{q} from exceeding an allowable range.

Next, the voltage command generator 540 generates d-axis and q-axis voltage command values v^{∗}_{d}, v^{∗}_{q} based on d-axis and q-axis current i_{d}, i_{q}, which have been axis-transformed into a two-phase polar coordinate system by the axis transformer 510, and the current command values i^{∗}_{d}, i^{∗}_{q} from the current command generator 530. For example, the voltage command generator 540 may generate the q-axis voltage command value v^{∗}_{q} based on a difference between the q-axis current i_{q} and the q-axis current command value i^{∗}_{q} while a PI controller 544 implements PI control. In addition, the voltage command generator 540 may generate the d-axis voltage command value v^{∗}_{d} based on a difference between the d-axis current i_{d} and the d-axis current command value i^{∗}_{d} while a PI controller 548 implements PI control. The d-axis voltage command value v^{∗}_{d} may be set to zero to correspond to the d-axis current command value i^{∗}_{d} that is set to zero.

The voltage command generator 540 may include a limiter (not shown) that limits the level of the d-axis and q-axis voltage command values v^{∗}_{d}, v^{∗}_{q} to prevent these voltage command values v^{∗}_{d}, v^{∗}_{q} from exceeding an allowable range.

Meanwhile, the generated d-axis and q-axis voltage reference values V^{∗}_{d} and V^{∗}_{q} are input to the axis transformer 550.

The axis transformer 550 receives the calculated position *θ̂ᵣ* and the d-axis and q-axis voltage reference values V^{∗}_{d} and V^{∗}_{q} from the position estimator 320 to perform axis transformation.

First, the axis transformer 550 implements transformation from a two-phase polar coordinate system into a two-phase absolute coordinate system. In this case, the calculated position *θ̂ᵣ* from the velocity calculator 520 may be used.

The axis transformer 550 implements transformation from the two-phase absolute coordinate system into a three-phase absolute coordinate system. Through this transformation, the axis transformer 550 outputs three-phase output voltage command values v^{∗}a, v^{∗}b, v^{∗}c.

The switching control signal output portion 560 generates and outputs a PWM inverter switching control signal Sic based on the three-phase output voltage command values v^{∗}a, v^{∗}b, v^{∗}c.

The output inverter switching control signal Sic may be converted into a gate drive signal by a gate motor driver (not shown), and may then be input to a gate of each switching element included in the inverter 420. Thereby, the respective switching elements Sa, S'a, Sb, S'b, Sc, S'c included in the inverter 420 implement switching.

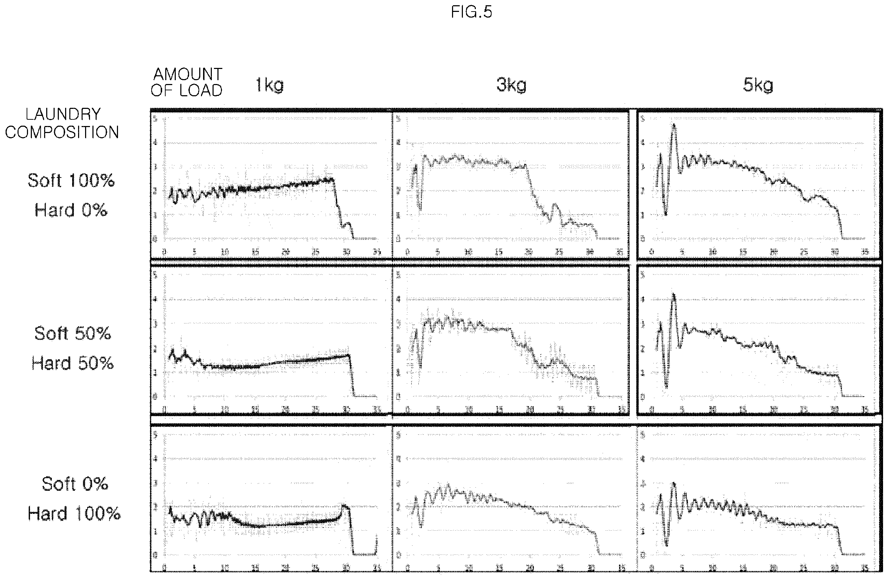

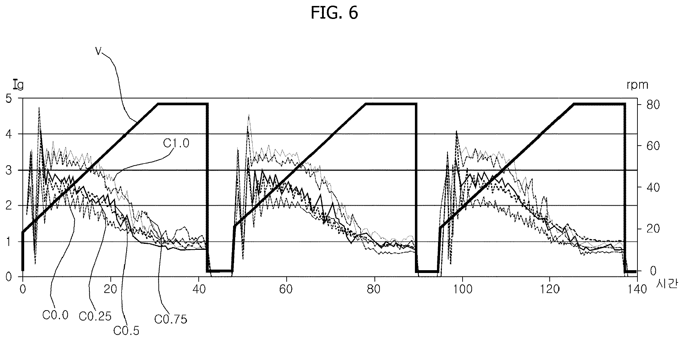

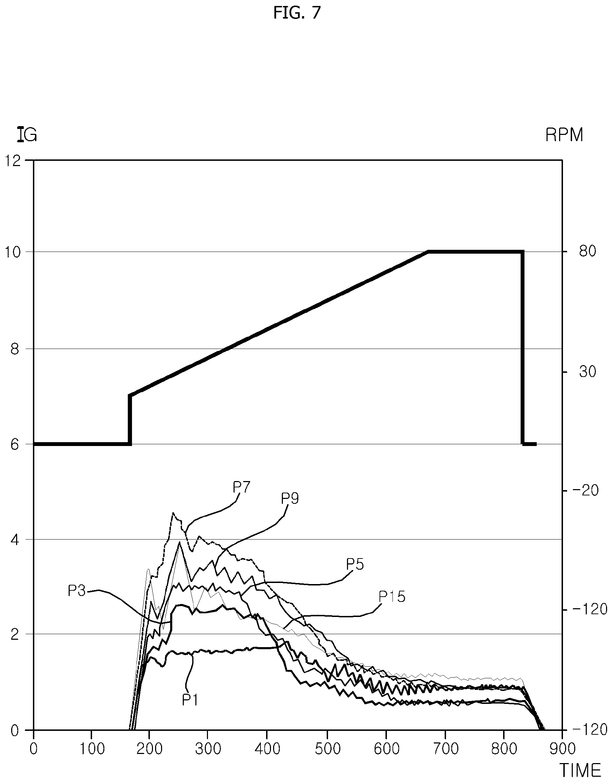

FIG. 5 is a diagram illustrating patterns of current applied to a motor based on quality of laundry and amount of load (amount of laundry); FIG. 6 is a diagram illustrating a current patterns by quality of laundry; and FIG. 7 is a diagram illustrating current patterns by load when the speed of a motor is controlled using a predetermined method.

Graphs shown in FIG. 5 show present output currents measured while the washing tub 120 is accelerated to a predetermined target rotational speed (e.g., 80 rpm). In these graphs, measurement was performed by varying the composition of laundry (i.e., the mixing ratio between soft laundry and hard laundry) and amount of load.

That is, it is possible to identify a change in the pattern according to amount of load from the graphs arranged horizontally. For example, in the case of the same composition of laundry , it can be seen that as amount of load increases, a maximum value of the present output current in the initial stage of acceleration of the washing tub 120 increases. Accordingly, it may be appropriate to use the initial data of the graphs to determine amount of load (amount of laundry).

It is possible to identify a change in the pattern according to the composition of laundry from the graphs arranged vertically. For example, in the case of the same amount of load, it can be seen that as the percentage of hard laundry increases, the current value decreases, and that this phenomenon is particularly prominent in the intermediate and last stage of acceleration of the washing tub 120, in the intermediate/last stage of rotation of the washing tub 120, or in a period in which the target rotational speed is maintained. Accordingly, it may be appropriate to obtain data required for obtaining quality of laundry after a period in which data for use in determining amount of laundry are obtained.

FIG. 6 illustrates the pattern of a present output current by composition of laundry (quality of laundry).

In FIG. 6, C0.0 indicates 100% of soft laundry, C0.25, C0.5, and C0.75 indicate that the ratio of soft laundry to hard laundry is 1:3, 1:1, and 3:1, respectively, and C1.0 indicates 100% of hard laundry. In each case, the total amount of laundry (amount of load) including both soft laundry and hard laundry is uniform.

The graphs show that, in the case where composition of laundry is changed, the pattern of the present output current is changed even though amount of load is uniform. Accordingly, composition of laundry (or amount of laundry) may be classified based on machine learning of the current pattern.

Sensing of amount of laundry/quality of laundry may be repeated a plurality of times. In this embodiment, sensing of amount of laundry/quality of laundry is repeated three times, but the present disclosure is not limited thereto. Sensing of amount of laundry/quality of laundry may be repeated a plurality of times at the same step, and may be repeated a plurality of times at different steps.

The controller 210 may set a during algorithm, or may change the setting of the drying algorithm, according to each sensing result of the amount of laundry/quality of laundry, and may control the operation of the dryer according to the set washing algorithm.

Graphs P1, P3, P5, P7, P9, and P15 shown in FIG. 7 indicate that amount of laundry is 1 kg, 3 kg, 5 kg, 7 kg, 9 kg, and 15 kg, respectively. Each of the graphs is generally formed such that the present current value is sharply increased to a predetermined level in the initial stage of acceleration of the washing tub 120 and converges on a uniform value in the last stage of rotation of the washing tub 120. In particular, it can be seen that deviation in the present output current value according to the amount of laundry is prominent in the initial stage of acceleration of the washing tub 120.

The controller 210 may include a learning processor 213 and a recognition processor 216. The learning processor 213 may perform machine learning by using the present output current value detected by the output current detector E or by using a value obtained by processing the present output current value. The learning processor 213 may update the database stored in the memory 240 through machine learning.

Any one of unsupervised learning and supervised learning may be used as a learning method of the learning processor 213.

The recognition processor 216 may determine a level according to the amount of laundry based on data trained by the learning processor 213. Determining the amount of laundry may include classifying laundry, introduced into the washing tub 120, into a predetermined plurality of levels of amount of laundry according to amount of laundry or load of laundry.

In this embodiment, amount of laundry is classified into five steps (levels). Amount of load (kg) corresponding to each step is shown in Table 1 below. In addition, Table 1 statistically shows the number of members constituting a family in the case in which laundry having corresponding amount of laundry is introduced into the dryer of the family.

**[Table 1]**

| Amount of laundry (5 steps) | Amount of load | Number of family members |
|---|---|---|
| Level 1 | 0 kq to 1 kq | 1 |
| Level 2 | 1 kq to 3 kq | 1 or 2 |
| Level 3 | 3 kq to 5 kq | 2 |
| Level 4 | 5 kq to 6 kq | 3 or more |
| Level 5 | 6 kq or more | |

Determining the quality of laundry serves to classify laundry introduced into the washing tub 120 based on predetermined criteria. The criteria may include the material of laundry, the softness or hardness of laundry, the water content of laundry, and the volumetric difference between dry laundry and wet laundry.

Based on the present output current value obtained by the output current detector E, the recognition processor 216 may determine a amount of laundry step, to which the laundry introduced into the washing tub 120 corresponds, among the plurality of amount of laundry steps, and a quality of laundry step, to which the laundry corresponds (i.e., quality of laundry by amount of laundry), among the quality of laundry steps.

In this embodiment, the quality of laundry is classified into five steps (levels). Types corresponding to each step are shown in Table 2 below. Referring to Table 2, laundry that is soft and is not durable may be determined as level 1 (a first step of quality of laundry), laundry that is more durable than level 1 laundry may be determined as level 3 (a third step of quality of laundry), laundry that is more durable than level 3 laundry and is hard may be determined as level 5 (a fifth step of quality of laundry), a mixture of level 1 laundry and level 3 laundry may be determined as level 2 (a second step of quality of laundry), and a mixture of level 3 laundry and level 5 laundry may be determined as level 4 (a fourth step of quality of laundry).

**[Table 2]**

| Quality of laundry (5 steps) | Wear degree/drying strength | Laundry type |
|---|---|---|
| Level 1 | Wear degree: high/ drying strenqth: low | clothes made of light and soft materials, underwear made of delicate materials (e.g. silk) |
| Level 2 | Mixture of level 1 and level 3 clothes | |
| Level 3 | Wear degree: medium/ drying strenqth: medium | Cotton-spun outer, cotton-spun/mixed- spun underwear |
| Level 4 | Mixture of level 3 and level 5 clothes | thick materials, durable materials, hard materials (e.g., autumn jumpers, winter jumpers, and work clothes) |
| Level 5 | Wear degree: low/ drying strenqth: hiqh | |

The recognition processor 126 may be equipped with an artificial neural network (ANN) trained in advance based on machine learning. The artificial neural network may be updated by the learning processor 213.

The recognition processor 216 may determine amount of laundry and quality of laundry based on the artificial neural network. In the case where amount of laundry is classified into five steps, as in this embodiment, the recognition processor 216 may determine the step to which amount of laundry belongs, and may also determine the step to which quality of laundry belongs, by using the present output current value detected by the output current detector E as input data of the artificial neural network (ANN).

The recognition processor 216 may include the artificial neural network (ANN) trained to classify the amount of laundry and quality of laundry based on predetermined criteria.

For example, the recognition processor 216 may include a deep neural network (DNN) trained based on deep learning, such as a convolutional neural network (CNN), a recurrent neural network (RNN), and a deep belief network (DBN).

The recurrent neural network (RNN) may have an artificial neural network structure that is frequently used in natural language processing and the like and is effective for processing time-series data which vary over time and that is formed by building up layers at each instance.

The deep belief network (DBN) has a deep learning structure formed by stacking multiple layers of a restricted Boltzmann machine (RBM), which is a deep learning technique. The deep belief network (DBN) may have a predetermined number of layers formed by repeating restricted Boltzmann machine (RBM) learning.

The convolutional neural network (CNN) is a model mimicking a human brain function, built on the assumption that, when a person recognizes an object, the brain extracts basic features of the object and recognizes the object based on the result of complex processing in the brain.

Meanwhile, the artificial neural network may be trained by adjusting connection weights between nodes (if necessary, adjusting bias values as well) so as to produce desired output from given input. The artificial neural network may continuously update the weight values through learning. Methods such as back propagation may be used in training the artificial neural network.

The recognition processor 216 may determine at least one of amount of laundry or quality of laundry of laundry introduced into the washing tub 120 from output of an output layer using the present output current value as input data and based on weights between nodes included in the deep neural network (DNN).

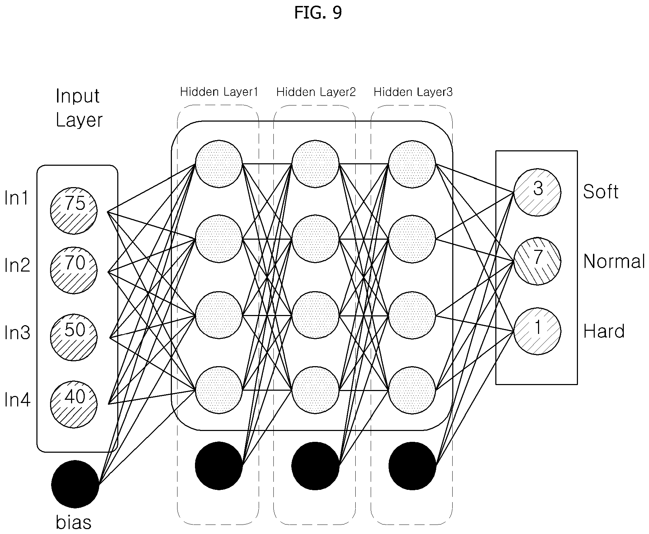

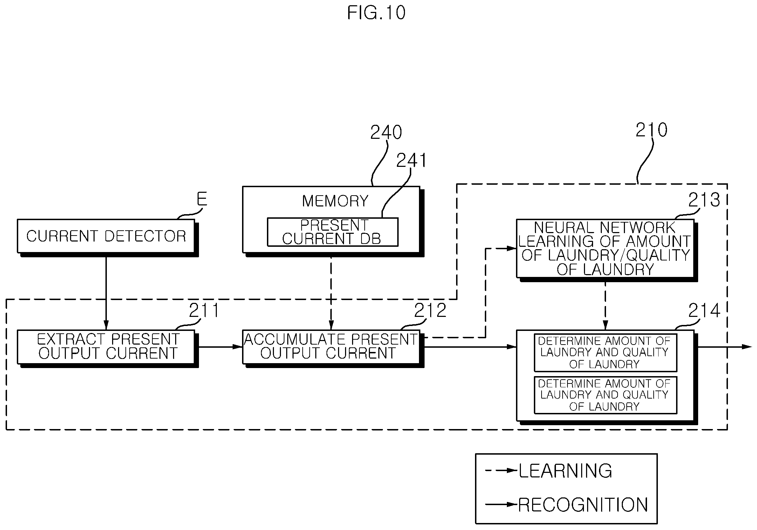

FIG. 9 is a schematic diagram illustrating an example of the artificial neural network; and FIG. 10 is a schematic diagram illustrating a process of determining amount of laundry and quality of laundry using a present current value of the motor, by dividing the process into a learning process and a recognition process.

Hereinafter, a description will be given with reference to FIGS. 9 and 10. Deep learning, which is a subfield of machine learning, enables data-based learning through multiple layers.

Deep learning may exhibit a collection of machine learning algorithms that extract core data from a plurality of data through a sequence of hidden layers.

The deep learning structure may include an artificial neural network (ANN). For example, the deep learning structure may include a deep neural network (DNN), such as a convolutional neural network (CNN), a recurrent neural network (RNN), and a deep belief network (DBN).

Referring to FIG. 9, the artificial neural network (ANN) may include an input layer, hidden layers, and an output layer. The deep neural network (DNN) includes a plurality of hidden layers. Each layer includes a plurality of nodes, and each layer is related to the next layer. The nodes may be connected to each other while having weights.

Output from an arbitrary node belonging to a first hidden layer (hidden Layer 1) becomes input to at least one node belonging to a second hidden layer (hidden Layer 2). In this case, input to each node may be a value obtained by applying a weight to output from a node of the previous layer. A weight may mean connection strength between nodes. The deep learning process may be a process of finding an appropriate weight.

A well-known facial recognition process will be described for better understanding of deep learning. A computer may distinguish between bright pixels and dark pixels depending on the brightness of pixels, may distinguish between simple forms, such as contours and edges, and may distinguish between complicated forms and objects from an input image. Finally, the computer may grasp a form prescribing the face of a human. Materialization of such a feature (prescription of the facial form of the human) is finally obtained from the output layer through a plurality of hidden layers.

The memory 240 may store input data for sensing amount of laundry and data necessary to train the deep neural network (DNN). The memory 240 may store motor speed data obtained by the speed sensor 245 and/or speed data added or processed for each predetermined period. In addition, the memory 240 may store weights and biases constituting a deep neural network (DNN) structure.

Alternatively, in some embodiments, the weights and biases constituting the deep neural network structure may be stored in a memory embedded in the recognition processor 216.

Meanwhile, the learning processor 213 may perform learning using the present output current value detected by the output current detector E as training data. That is, each time amount of laundry and/or quality of laundry are recognized or determined, the learning processor 213 may add the result of determination to the database to update the deep neural network (DNN) structure, such as weights or biases. Alternatively, after training data are obtained a predetermined number of times, the learning process may be performed using the obtained training data to update the deep neural network (DNN) structure, such as weights.

The dryer according to the embodiment of the present disclosure may transmit the present output current data obtained by the output current detector E through the transceiver 270 to a server 500 connected to a communication network, and may receive data related to machine learning from the server 500. In this case, the dryer may update the artificial neural network based on the data related to machine learning received from the server.

Alternatively, in the dryer according to the embodiment of the present disclosure, the controller 210 may perform learning using DNN based on the present output current data obtained by the output current detector E, and may derive data related to machine learning.

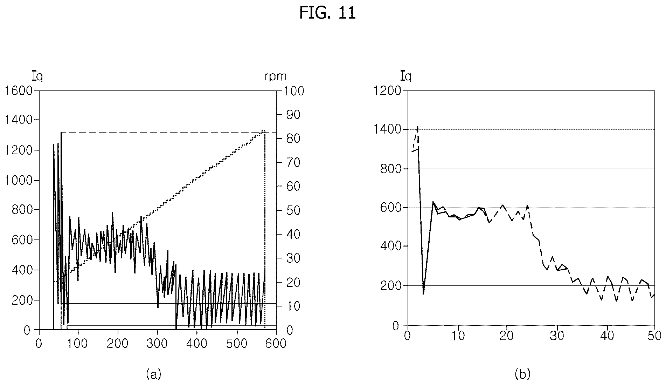

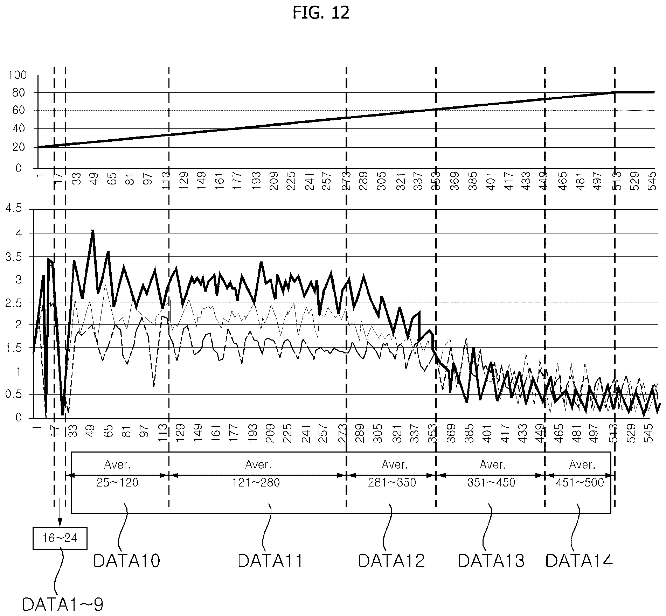

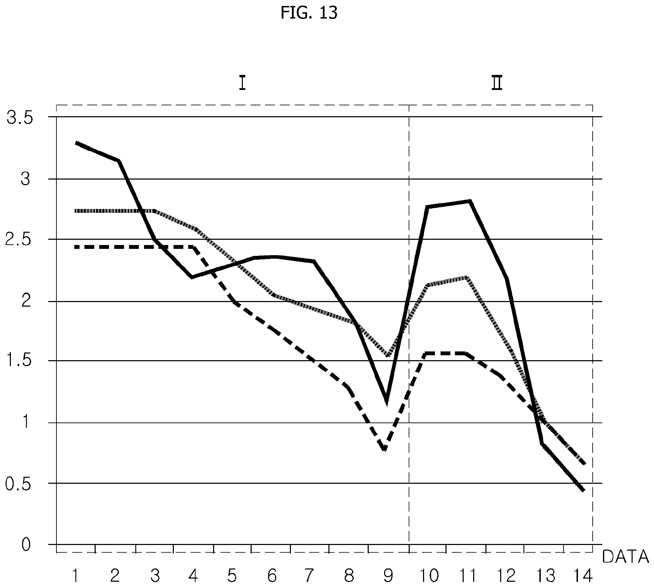

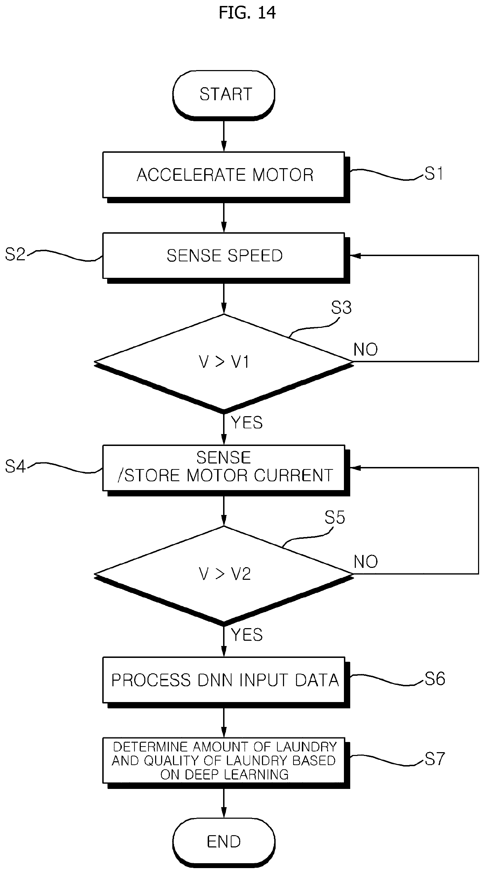

FIG. 11 is a diagram illustrating (a) a graph showing a present current value detected by a current detector, and (b) a graph showing average values obtained by processing a moving average filter; FIG. 12 is a diagram illustrating a graph showing current values detected by a current detector; FIG. 13 is a diagram illustrating a graph showing values, obtained by processing the current values of the graph shown in FIG. 11, for use as input data of the artificial neural network; and FIG. 14 is a flowchart illustrating a method of controlling a dryer according to an embodiment of the present disclosure. Hereinafter, a method of determining amount of laundry and quality of laundry will be described with reference to FIGS. 11 to 14.

The controller 210 controls the motor 230 to rotate at a predetermined target rotational speed (SI, S2, S3, S4, and S5). During the rotation of the motor 230, the rotational speed of the washing tub 120 is sensed by the speed sensor 245 (S2).

The target rotational speed may be set as a rotational speed of the washing tub 120 at which the state in which laundry clings to the drum 122 can be maintained when the washing tub 120 is continuously rotated one or more revolutions in one direction while maintaining the target rotational speed. That is, the target rotational speed may be set as the rotational speed of the washing tub 120 at which the laundry may be rotated integrally with the drum 122. When the washing tub 120 is rotated at the target rotational speed, centrifugal force applied to the laundry due to the rotation of the washing tub 120 may be greater than gravity applied to the laundry.

The target rotational speed may range from 60 rpm to 80 rpm, and may be preferably 80 rpm. Preferably, in the state before the rotational speed of the washing tub 120 reaches the target rotational speed, the laundry moves in the drum 122. That is, the laundry is raised to a predetermined height and then dropped by rotation of the drum 122.

The present output current values used to determine amount of laundry and quality of laundry include values adopted in a period in which the laundry moves during rotation of the washing tub 120. That is, the controller 210 may adopt required present output current values based on the rotational speed of the washing tub 120 (or the rotational speed of the motor 230) sensed by the speed sensor 245.

Specifically, the controller 210 commands the motor driver 220 to accelerate the motor 230, and then, when the rotational speed sensed by the speed sensor 245 reaches a predetermined first rotational speed V1, the controller 210 may store the present output current values from that time in the memory 210 (S3 and S4).

When the rotational speed V of the washing tub 120 reaches a predetermined second rotational speed V2, the controller 210 may process the present output current values, without further storing the present output current value (S5 and S6). Here, the second rotational speed V2 is the target rotational speed.

Meanwhile, the acceleration gradient in the acceleration period from the first rotational speed V1 to the second rotational speed V2 may be uniform. Preferably, the acceleration gradient is maintained uniform in order to improve reliability in sensing a change in the pattern of current.

The acceleration gradient must not be too high such that a change in the movement of laundry in the washing tub 120 is clearly exhibited. The acceleration gradient is preferably 1.5 rpm/s to 2.5 rpm/s, more preferably 2.0 rpm/s. However, the present disclosure is not limited thereto. The acceleration gradient may have a smallest possible value within a range controllable by the controller 210.

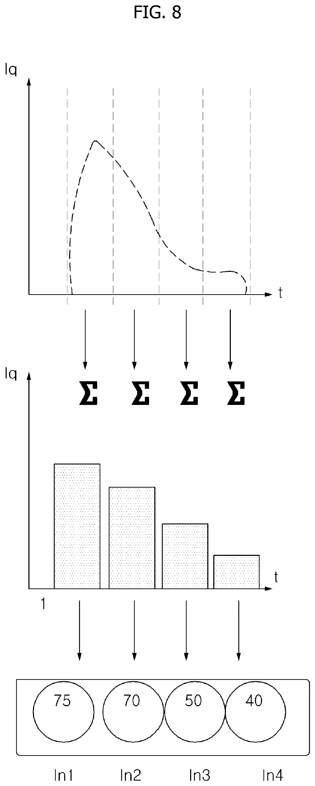

As shown in FIG. 8, processing of the present output current value is a process of processing the present current values Iq obtained at predetermined points of time according to a predetermined algorithm, so as to generate input data In1, In2, In3, In4, ... of the input layer of the artificial neural network (S6).

This process may include a step of obtaining the average of the present output current values Iq and a step of generating input data of the artificial neural network by processing the obtained average values according to a predetermined parsing rule. In particular, the number of input data processed according to the parsing rule is less than the number of average values.

Referring to FIG. 10, the controller 210 may extract (211) current values at predetermined time intervals by using the output current detector E. In this embodiment, a total of 545 present output current values are obtained at predetermined time intervals in a period in which the rotational speed of the washing tub 120 is accelerated from the first rotational speed V1 to the second rotational speed V2.

The controller 210 may average the obtained present output current values by accumulating 212 the values in each predetermined time period. In this case, the controller 210 may use a moving average filter.

Moving average is a method of obtaining an average by moving from one section to another so as to determine change of the trend. For example, when the present output current values are Iq1, Iq2, Iq2, ..., Iqn in a time sequential order, Iq1 to Iql (I<n) are averaged to obtain M1, and Iqm (m>1) to Iqm+s-1 (s being the number of Iq used to obtain each moving average) are averaged to obtain M2. In this manner, moving averages may be obtained while continuously changing a period.

By properly setting time periods in which the moving average is obtained, the number of moving average values M1, M2, ... may be less than the number of total present output current values Iq. However, as the length of a time period (window) increases, the resolution of a change in the present output current is lowered. Therefore, it is necessary to appropriately select the length of the time period. In this embodiment, the controller 210 obtains 50 moving averages from 545 present output current values Iq using the moving average filter.

The controller 210 may generate input data In1, In2, In3, In4, ... by processing the present output current values and the moving averages according to the predetermined parsing rule. The parsing rule may be configured to select a period in which final input data are obtained such that features (amount of laundry/quality of laundry) to be obtained are well exhibited.

Referring to FIG. 12, in the embodiment of the present disclosure, a total of 14 input data are generated, and the input data include 9 present output current values DATA1 to DATA9 obtained at the initial stage of acceleration of the motor 230 (16^{th} to 24^{th} present output current values) and five average values DATA10 to DATA14 in subsequent periods divided according to a predetermined condition.

In particular, by obtaining the five average values based on the previously obtained moving averages, the operation may be processed more rapidly than adding the present output current values in the respective periods. Meanwhile, the obtained input data In1, In2, In3, In4, ..., In14 may be input values of the respective nodes of the input layer.

Weights and biases assigned to nodes constituting the artificial neural network are set through machine learning. Such machine learning is repeated based on a current pattern or present output current values.

In addition, the characteristics about amount of laundry and/or quality of laundry are reflected in the current pattern (or the present output current value) as described above, such that by performing machine learning or neural network learning 213 on data that are previously stored or added by operation of the dryer until an accurate result (i.e. accurate amount and quality of laundry introduced into the washing tub 120) is derived, improved or accurate weights and biases may be set.

In the artificial intelligence network constructed as described above, information of amount of laundry and quality of laundry may be reflected in the output of the output layer, and the controller 210 may determine amount of laundry and/or quality of laundry based on a node that outputs a maximum value, among the nodes of the output layer.

By inputting the input data, generated at step S6, into the artificial neural network, the controller 210 may obtain amount of laundry and/or quality of laundry from the output of the output layer (S7). Subsequently, the controller 210 may set a drying algorithm based on the amount of laundry and/or quality of laundry obtained at step S7, and may control the operation of the dryer according to the set drying algorithm.

The drying algorithm may include a running time of a drying process and the like, and a motor driving pattern in a drying cycle (e.g., a rotational speed, rotation time, acceleration, and braking), and the like.

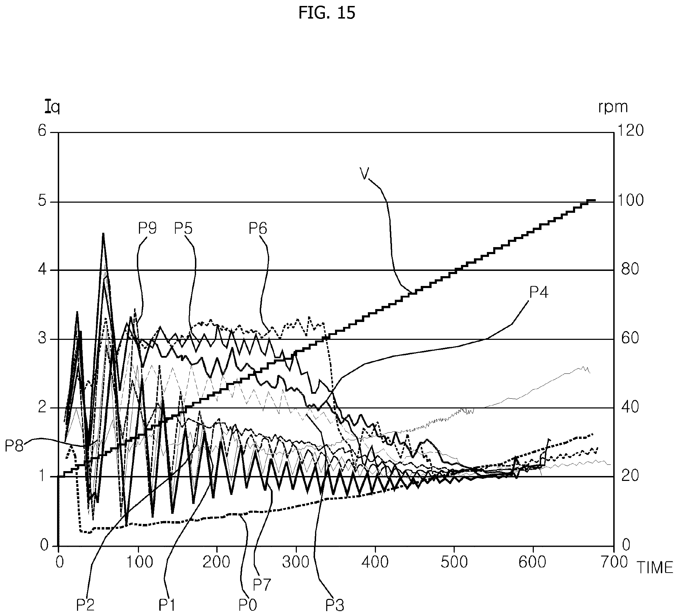

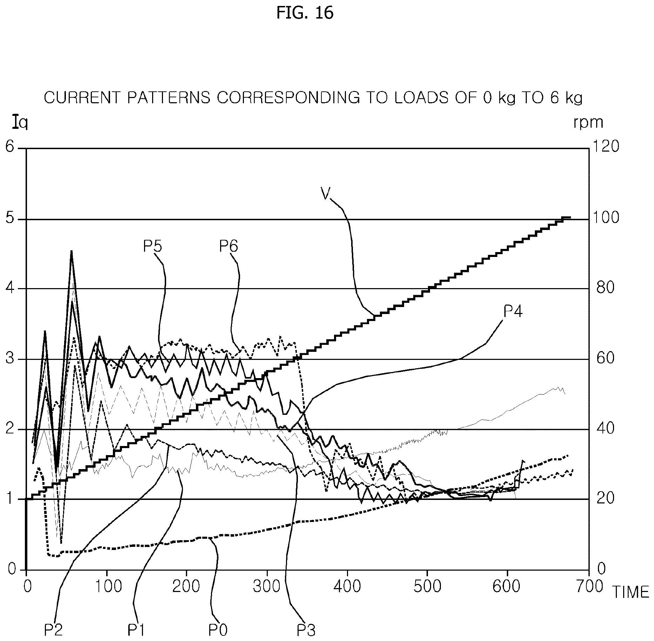

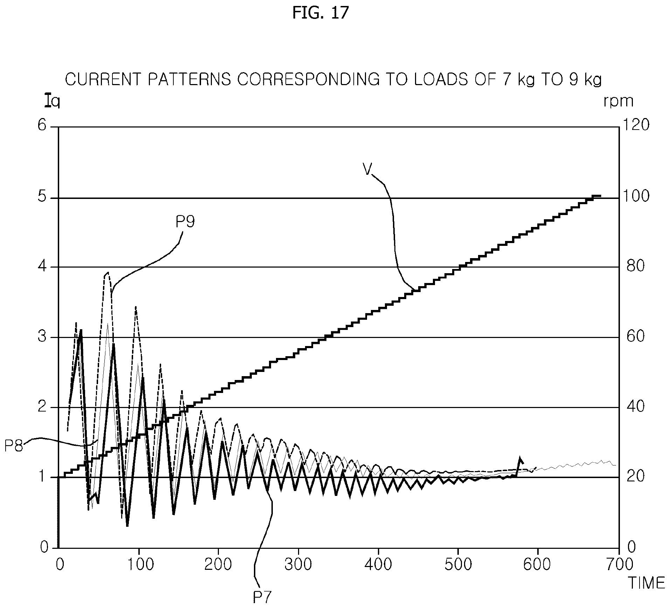

FIG. 15 is a diagram illustrating a graph showing patterns that are superimposed on one another; FIG. 16 is a graph showing classification of current patterns corresponding to loads of 0 kg to 6 kg in FIG. 15; and FIG. 17 is a graph showing classification of current patterns corresponding to loads of 7 kg to 9 kg in FIG. 15.

The following description will be described with reference to FIGS. 15 to 17, in which P0 to P9 indicate amount of loads (amount of laundrys) of 0 kg to 9 kg, respectively.

A problem may occur in that the laundry is caught in the door 113. This phenomenon occurs when a large amount of laundry, put into the washing machine 120, is pressed against or interferes with the door 113. The laundry being caught affects a load applied to the motor 230. Accordingly, it is desirable to exclude the present output current values, obtained by rotating (or accelerating) the washing tub 120 while the laundry is caught, from the process of determining the amount of laundry and/or quality of laundry.

Referring to FIGS. 16 and 17, it can be seen that current patterns P0 to P6 corresponding to amount of loads of 0 kg to 6 kg are distinctly different current patterns P7 to P9 corresponding to amount of loads of 0 kg to 6 kg. That is, in the case of a large amount of laundry (7 kg to 9 kg in this embodiment), the present output current values periodically fluctuate (or oscillate) in the initial stage of acceleration of the washing tub 120. This is because movement of a portion of the laundry is restricted by the door 133, such that when the washing tub 120 interferes with the restricted laundry, the load of the motor 230 increases, and then when the interference decreases or disappears, the load of the motor 230 decreases again. That is, fluctuations in the load of the motor 230 due to the restriction of the laundry occurs according to a rotation period of the washing tub 120.

These load change patterns may be trained through machine learning, and the training results may be built into a database and stored in the memory 240. The Artificial Neural Network (ANN) may be constructed by using the training results. Based on the constructed ANN, the controller 210 may determine restriction of the laundry (or laundry being caught) from the output of the output layer.

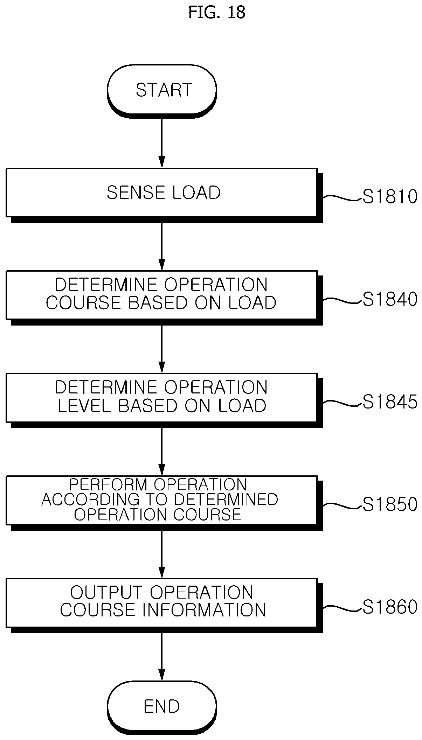

FIG. 18 is a flowchart illustrating a method of controlling a dryer according to an embodiment of the present disclosure. The method of controlling a dryer according to an embodiment of the present disclosure will be described below with reference to FIG. 18.

Referring to FIG. 18, the controller 210 may perform learning using DNN based on the output current detected by the output current detector E, and may determine and sense a load of laundry in the washing tub 120 by the learning (S1810).

For example, by performing the operations S1 to S7 of FIG. 14, the controller 210 may sense the load of the laundry in the washing tub 120.

When determining the load of the laundry in the washing tub 120, the controller 210 may determine amount of laundry and quality of laundry of the laundry.

Then, the controller 210 may perform classification based on information of load of the laundry.

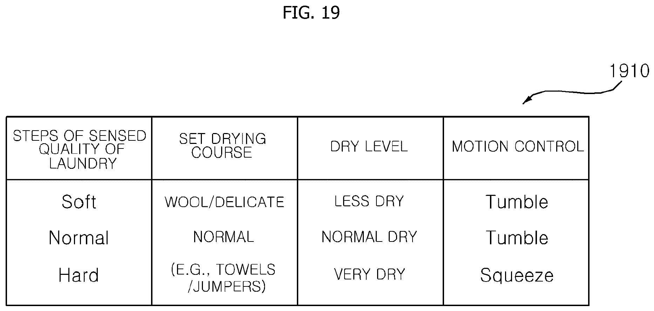

FIG. 19 is a diagram illustrating an example of a table 1910 formed by classifying the quality of laundry into first to third steps.

Referring to FIG. 19, the quality of laundry is classified into soft, normal, and hard; a drying cycle is classified into wool/delicate, normal, and towels and jumpers: a dry level is classified into less dry, normal dry, and very dry; and a motion control is classified into tumble, tumble, and squeeze.

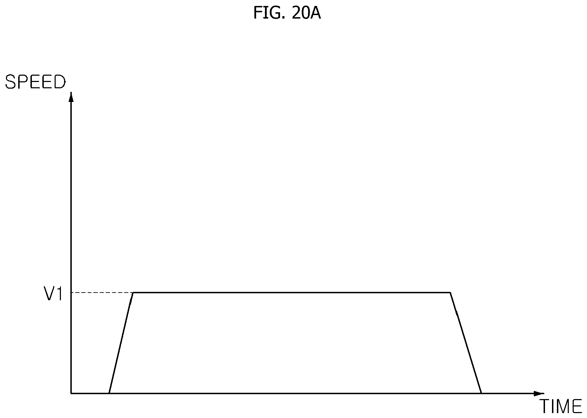

FIG. 20A is a timing diagram of a tumbling motion of the washing tub 12.

Referring to FIG. 20A, for the tumbling motion, the controller 210 may control the following operations to be performed sequentially: increase the speed of the washing tub 120 to the first speed V1, maintain the first speed, decrease the speed, and stop.

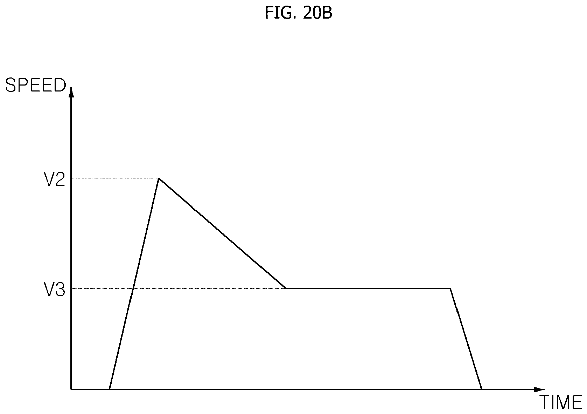

FIG. 20B is a timing diagram of a squeeze motion of the washing tub 120.

Referring to FIG. 20B, for the squeeze motion, the controller 210 may control the following operations to be performed sequentially: increase the speed of the washing tub 120 to the second speed V2 which is higher than the first speed V1, decrease the speed to the third speed V3, maintain the third speed V3, decrease the speed, and stop.

By using the learning processor 213 or the recognition processor 216, the controller 210 may perform classification as illustrated in FIG. 19. For example, the controller 210 may perform classification by using the DNN as illustrated in FIG. 19.

The controller 210 may perform classification by using an external server 500, as illustrated in FIG. 19.

Further, the controller 210 may determine an operation course based on the classification (S1840), thereby providing an optimal operation course corresponding to the calculated information of load of the laundry.

The controller 210 may perform learning based on DNN by using the temperature information sensed by the temperature sensor 189, the humidity information sensed by the humidity sensor 191, and the output current, may determine a load of the laundry in the washing tub 120 through learning, and may determine operation course information based on the information of load of the laundry. Accordingly, the controller 210 may determine the load of the laundry through learning using DNN based on the temperature, humidity, and output current, thereby providing optimal operation course information corresponding to the information of load of the laundry.

In addition, the controller 210 may perform an operation according to the determined operation course (S1850). Then, the controller 210 may output the operation course information to the display 118 or as sound (S1650).

FIG. 19 is a diagram illustrating an example of determining an operation course based on classified information.

In the drawing, a first operation course, such as "wool/delicate," a second operation course, such as "normal," and a third operation course, such as "towels/jumpers," are illustrated.

The first to third operation courses may be additional operation courses, i.e., new operation courses, which are not stored in the memory 240.

The controller 210 may control operations to be performed based on the determined operation course. That is, while performing a drying cycle based on the determined operation course, the controller 210 may vary a rotation speed, a rotation time, an applied current, and the like.

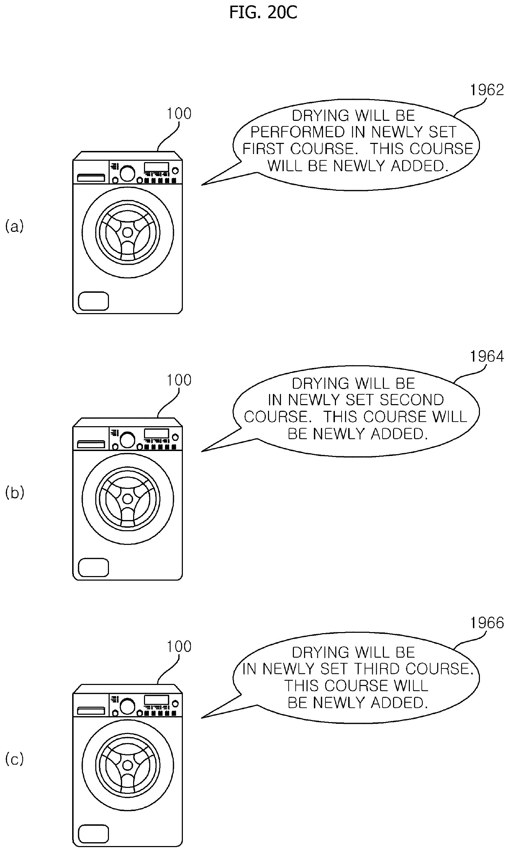

Upon determining the operation course, the controller 210 may output the determined operation course information as illustrated in FIG. 20C.

FIG. 20C is a diagram of outputting various operation courses as sound through an audio output device of the dryer 100.

In 20C, (a) illustrates an example of outputting information on the first operation course as sound 1962; (b) illustrates an example of outputting information on the second operation course as sound 1964; and (c) illustrates an example of outputting information on the third operation course as sound 1966.

Accordingly, a user may intuitively recognize the determined operation course information.

Unlike the example, the controller 210 may wirelessly transmit corresponding operation course information to a user's mobile terminal 600.

In this embodiment, based on the output current detected by the output current detector E, the controller 210 may perform learning using DNN, may determine the load of the laundry in the washing tub 120 through learning, and may determine the operation course information based on the information of load of the laundry. Accordingly, the controller 210 may provide optimal operation course information corresponding to information of load of the laundry. Particularly, by determining the load of the laundry through learning based on DNN, the controller 210 may provide optimal operation course information corresponding to the information of load of the laundry.

When determining the load of the laundry in the washing tub 120, the controller 210 may determine amount of laundry and quality of laundry of the laundry, thereby providing optimal operation course information corresponding to the amount of laundry and quality of laundry of the laundry.

The AI dryer 100 according to an embodiment of the present disclosure further includes the temperature sensor 189 for sensing the temperature in the washing tub 120 and the humidity sensor 191 for sensing the humidity in the washing tub 120, wherein the controller 210 may perform learning using DNN based on the temperature information sensed by the temperature sensor 189, the humidity information sensed by the humidity sensor 191, and the output current, may determine a load of the laundry in the washing tub 120 through learning, and may determine operation course information based on the information of load of the laundry. Accordingly, the controller 210 may determine the load of the laundry through learning using DNN based on the temperature, humidity, and output current, thereby providing optimal operation course information corresponding to the information of load of the laundry.

In the determination of the load, the laundry in the washing tub 120 includes the dehydrated laundry. Accordingly, by determining the load of the dried laundry, the controller 210 may provide optimal operation course information.

As illustrated in FIG. 20A, based on the output current detected by the output current detector E during a period of the tumbling motion of the washing tub 120, the controller 210 may perform learning using DNN, may determine the load of the laundry in the washing tub 120, and may determine operation course information based on the information of load of the laundry, thereby providing optimal operation course information corresponding to the information of load of the laundry.

The controller 210 may access the external server 500 to perform searching based on the classified information, and may determine operation course information based on the search result. Accordingly, the controller 210 may provide operation course information by using the external server 500.

The controller 210 may access the external server 500 to perform searching based on a level of information of load of the laundry, and may determine operation course information based on the search result. Accordingly, the controller 210 may provide operation course information by using the external server 500.

If the determined operation course information is first operation course information or second operation course information, the controller 210 may control the following operations to be performed sequentially: increase the speed of the washing machine 120 to the first speed, maintain the first speed, and decrease the speed, as illustrated in FIG. 20A.

If the determined operation course information is third operation course information, the controller 210 may control the following operations to be performed sequentially: increase the speed of the washing machine 120 to the second speed which is higher than the first speed, decrease the speed to a third speed, maintain the third speed, and decrease the speed, thereby providing an optimal operation of the washing tub 120 according to the operation course information.

The controller 210 may vary a dry level of the washing tub 120 according to the first operation course information to the third operation course information, thereby performing an optimal drying operation according to the operation course information.

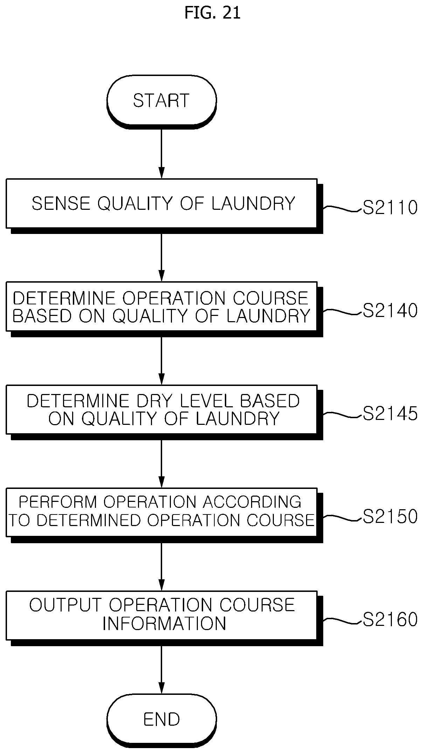

FIG. 21 is a flowchart illustrating a method of controlling a dryer according to another embodiment of the present disclosure.

Referring to FIG. 21, based on the output current detected by the output current detector E, the controller 210 may perform learning based on DNN, and may determine and sense the quality of laundry in the washing tub 120 (S2110).

For example, by performing operations S1 to S7 of FIG. 14, the controller 210 may sense the quality of the laundry in the washing tub 120.

Then, the controller 210 may perform classification based on the information of quality of laundry.

FIG. 19 is a diagram illustrating an example of a table 1910 formed by classifying the quality of laundry into first to third steps.

Referring to FIG. 19, the quality of laundry is classified into soft, normal, and hard; a drying cycle is classified into wool/delicate, normal, and towels and jumpers: a dry level is classified into less dry, normal dry, and very dry; and a motion control is classified into tumble, tumble, and squeeze.

FIG. 20A is a timing diagram of a tumbling motion of the washing tub 12.

Referring to FIG. 20A, for the tumbling motion, the controller 210 may control the following operations to be performed sequentially: increase the speed of the washing tub 120 to the first speed V1, maintain the first speed, decrease the speed, and stop.

FIG. 20B is a timing diagram of a squeeze motion of the washing tub 120.

Referring to FIG. 20B, for the squeeze motion, the controller 210 may control the following operations to be performed sequentially: increase the speed of the washing tub 120 to the second speed V2 which is higher than the first speed V1, decrease the speed to the third speed V3, maintain the third speed V3, decrease the speed, and stop.

By using the learning processor 213 or the recognition processor 216, the controller 210 may perform classification as illustrated in FIG. 19. For example, the controller 210 may perform classification by using DNN as illustrated in FIG. 19.

The controller 210 may perform classification by using an external server 500, as illustrated in FIG. 19.

Then, the controller 210 may determine an operation course based on the classification (S2140), thereby providing an optimal operation course corresponding to the calculated quality information of the laundry.

The controller 210 may perform learning using DNN based on the temperature information sensed by a temperature sensor 219, the humidity information sensed by the humidity sensor 191, and the output current, may determine quality of the laundry in the washing tub 120 through learning using DNN, and may determine operation course information based on the quality information of the laundry. Accordingly, the controller 210 may determine the quality of the laundry through learning using DNN based on the temperature, humidity, and output current, thereby providing optimal operation course information corresponding to the information of quality of laundry.

Subsequently, the controller 210 may perform an operation according to the determined operation course (S2150). Next, the controller 210 may output the operation course information to the display 118 or as sound (S1650).

FIG. 19 is a diagram illustrating an example of determining an operation course based on classified information.

In the drawing, a first operation course, such as "wool/delicate," a second operation course, such as "normal," and a third operation course, such as "towels/jumpers," are illustrated.

The first to third operation courses may be additional operation courses, i.e., new operation courses, which are not stored in the memory 240.

The controller 210 may control operations to be performed based on the determined operation course. That is, while performing a drying cycle based on the determined operation course, the controller 210 may vary a rotation speed, a rotation time, an applied current, and the like.

Upon determining the operation course, the controller 210 may output the determined operation course information as illustrated in FIG. 20C.

FIG. 20C is a diagram of outputting various operation courses as sound through an audio output device of the dryer 100.

In 20C, (a) illustrates an example of outputting information on the first operation course as sound 1962; (b) illustrates an example of outputting information on the second operation course as sound 1964; and (c) illustrates an example of outputting information on the first operation course as sound 1966.

Accordingly, a user may intuitively recognize the determined operation course information.

Unlike the example, the controller 210 may wirelessly transmit corresponding operation course information to a user's mobile terminal 600.

In this embodiment, based on the output current detected by the output current detector E, the controller 210 may perform learning using DNN, may determine the quality of the laundry in the washing tub 120 through learning, and may determine the operation course information based on the quality information of the laundry. Accordingly, the controller 210 may provide optimal operation course information corresponding to information of quality of laundry. Particularly, by determining the quality of the laundry through learning using DNN, the controller 210 may provide optimal operation course information corresponding to the information of quality of laundry.

When determining the quality of the laundry in the washing tub 120, the controller 210 may determine amount of laundry and quality of laundry of the laundry, thereby providing optimal operation course information corresponding to the amount of laundry and quality of laundry of the laundry.

The AI dryer 100 according to an embodiment of the present disclosure further includes the temperature sensor 219 for sensing the temperature in the washing tub 120 and the humidity sensor 191 for sensing the humidity in the washing tub 120, wherein the controller 210 may perform learning using DNN based on the temperature information sensed by the temperature sensor 219, the humidity information sensed by the humidity sensor 191, and the output current, may determine quality of the laundry in the washing tub 120 through learning, and may determine operation course information based on the information of quality of laundry. Accordingly, the controller 210 may determine the quality of the laundry through learning using DNN based on the temperature, humidity, and output current, thereby providing optimal operation course information corresponding to the information of quality of laundry.

In the determination of the quality of laundry, the laundry in the washing tub 120 includes the dehydrated laundry. Accordingly, by determining the quality of the dried laundry, the controller 210 may provide optimal operation course information.

As illustrated in FIG. 20A, based on the output current detected by the output current detector E during a period of the tumbling motion of the washing tub 120, the controller 210 may perform learning using DNN, may determine the quality of the laundry in the washing tub 120, and may determine operation course information based on the information of quality of laundry, thereby providing optimal operation course information corresponding to the information of quality of laundry.

The controller 210 may access the external server 500 to perform searching based on the classified information, and may determine operation course information based on the search result. Accordingly, the controller 210 may provide operation course information by using the external server 500.

The controller 210 may access the external server 500 to perform searching based on a level of quality information of the laundry, and may determine operation course information based on the search result, thereby providing operation course information by using the external server 500.

If the determined operation course information is first operation course information or second operation course information, the controller 210 may control the following operations to be performed sequentially: increase the speed of the washing machine 120 to the first speed, maintain the first speed, and decrease the speed, as illustrated in FIG. 20A.

If the determined operation course information is third operation course information, the controller 210 may control the following operations to be performed sequentially: increase the speed of the washing machine 120 to the second speed which is higher than the first speed, decrease the speed to a third speed, maintain the third speed, and decrease the speed, thereby providing an optimal operation of the washing tub 120 according to the operation course information.

The controller 210 may vary a dry level of the washing tub 120 according to the first operation course information to the third operation course information, thereby performing an optimal drying operation according to the operation course information.

The above example of determining the quality of laundry based on learning and determining the optimal drying operation course corresponding thereto may be modified variously.

For example, the controller 210 may determine the amount of laundry and quality of laundry through learning, and may determine an optimal drying operation course corresponding to a level of the amount of laundry and quality of laundry, and the like.

The dryer according to the present disclosure is not limited to the configuration and method of the embodiments described above, but the embodiments may be configured by selectively combining all or part of each embodiment so that various modifications can be made.

Meanwhile, a method of operating the dryer according to the present disclosure can be realized as a processor-readable code written on a recording medium readable by a processor included in the image display apparatus. The processor-readable recording medium may be any type of recording device in which data is stored in a processor-readable manner.

Further, it will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A dryer comprising:
a casing;
a washing tub disposed in the casing;
a motor configured to rotate the washing tub;
a driver configured to drive the motor and including an output current detector for detecting an output current flowing through the motor;
a heat supplier configured to supply heat to the washing tub; and
a controller configured to control the driver,
wherein the controller is configured to perform learning using deep neural network (DNN) based on the output current detected by the output current detector, determine a load of laundry in the washing tub by the learning, and determine operation course information based on information of load of the laundry.

2. The dryer of claim 1, wherein when determining the load of the laundry in the washing tub, the controller determines amount of laundry and quality of laundry of the laundry.

3. The dryer of claim 1, further comprising:
a temperature sensor configured to sense temperature in the washing tub; and
a humidity sensor configured to sense humidity in the washing tub,
wherein the controller performs learning using DNN based on temperature information sensed by the temperature sensor, humidity information sensed by the humidity sensor, and the output current, determines the load of the laundry in the washing tub by the learning, and determines the operation course information based on the information of load of the laundry.

4. The dryer of claim 1, wherein during determination of the load, the laundry in the washing tub comprises dehydrated laundry.

5. The dryer of claim 1, wherein the controller performs the learning using DNN based on the output current detected by the output current detector during a period of a tumbling motion of the washing tub, determines the load of the laundry in the washing tub by the learning, and determines the operation course information based on the information of load of the laundry.

6. The dryer of claim 1, wherein the controller performs an operation based on the determined operation course information, and outputs the operation course information.

7. The dryer of claim 1, further comprising a memory for storing a plurality of operation course information,
wherein the determined operation course information is additional operation course information which is not stored in the memory.

8. The dryer of claim 7, wherein the memory stores the additional operation course information.

9. The dryer of claim 1, wherein the controller performs classification for setting an operation course based on a level of the information of load of the laundry, and determines the operation course information based on the classification.

10. The dryer of claim 9, further comprising a transceiver configured to communicate with an external mobile terminal or a server,
where the controller accesses the external server to perform searching based on classified information obtained by the classification, and determines the operation course information based on a search result.

11. The dryer of claim 1, further comprising a transceiver configured to communicate with an external mobile terminal or a server,
where the controller accesses the external server to perform searching based on the level of the information of load of the laundry, and determines the operation course information based on a search result.

12. The dryer of claim 1, wherein:
in response to the determined operation course information being first operation course information or second operation course information, the controller controls operations of increasing a speed of the washing tub to a first speed, maintaining the first speed, and decreasing the speed to be performed sequentially; and
in response to the determined operation course information being third operation course information, the controller controls operations of increasing the speed of the washing tub to a second speed which is higher than the first speed, decreasing the speed to a third speed, maintaining the third speed, and decreasing the speed to be performed sequentially.

13. The dryer of claim 1, wherein in response to the determined operation course information being any one of the first operation course information to the third operation course information, the controller varies a dry level in the washing tub based on any one of the first operation course information to the third operation course information.

14. A dryer comprising:
a casing;
a washing tub disposed in the casing;
a motor configured to rotate the washing tub;
a driver configured to drive the motor and including an output current detector for detecting an output current flowing through the motor;
a heat supplier configured to supply heat to the washing tub; and
a controller configured to control the driver,
wherein the controller is configured to perform learning using DNN based on the output current detected by the output current detector, determine quality of laundry of laundry in the washing tub by the learning, and determine operation course information based on information of quality of laundry of the laundry.

15. The dryer of claim 14, further comprising:
a temperature sensor configured to sense temperature in the washing tub; and
a humidity sensor configured to sense humidity in the washing tub,
wherein the controller performs learning using DNN based on temperature information sensed by the temperature sensor, humidity information sensed by the humidity sensor, and the output current, determines the quality of the laundry in the washing tub by the learning, and determines the operation course information based on the information of quality of laundry of the laundry.
